(19) **Europäisches Patentamt**

**European Patent Office**

**Office européen des brevets**

(11) **EP 1 331 605 B1**

(12) **EUROPEAN PATENT SPECIFICATION**

(45) Date of publication and mention
of the grant of the patent:
**06.12.2006 Bulletin 2006/49**

(51) Int Cl.:
***G06T 3/00*** (2006.01)

(21) Application number: **03250440.9**

(22) Date of filing: **24.01.2003**

(54) **Omnidirectional visual system and method**

Weitwinkel-Beobachtungssystem und Verfahren

Système et méthode de vision omnidirectionnel

(84) Designated Contracting States:
**DE FR GB**

(30) Priority: **29.01.2002 JP 2002020700**

(43) Date of publication of application:
**30.07.2003 Bulletin 2003/31**

(60) Divisional application:
**06008462.1 / 1 686 534**

(73) Proprietor: **SHARP KABUSHIKI KAISHA**
**Osaka 545-8522 (JP)**

(72) Inventors:
• **Kawakami, Kenichi**
**Tenri-shi,**
**Nara (JP)**
• **Kumata, Kiyoshi**
**Kyotanabe-shi,**
**Kyoto (JP)**
• **Nakano, Kohichi**
**Tenri-shi,**
**Nara (JP)**

(74) Representative: **Brown, Kenneth Richard et al**
**R.G.C. Jenkins & Co.**
**26 Caxton Street**
**London SW1H 0RJ (GB)**

(56) References cited:
**US-A- 6 130 783**

• **ONOE Y ET AL: "Visual surveillance and monitoring system using an omnidirectional video camera" PROCEEDINGS. FOURTEENTH INTERNATIONAL CONFERENCE ON PATTERN RECOGNITION (CAT. NO.98EX170) IEEE COMPUT. SOC LOS ALAMITOS, CA, USA, vol. 1, 20 August 1998 (1998-08-20), pages 588-592 vol. 1, XP010297598 ISBN: 0-8186-8512-3**
• **YAMAZAWA K ET AL: "Omnidirectional imaging with hyperboloidal projection" IROS '93. PROCEEDINGS OF THE 1993 IEEE/RSJ INTERNATIONAL CONFERENCE ON INTELLIGENT ROBOTS AND SYSTEMS. INTELLIGENT ROBOTS FOR FLEXIBILITY (CAT. NO.93CH3213-6) IEEE NEW YORK, NY, USA, 30 July 1993 (1993-07-30), pages 1029-1034 vol., XP010219360 ISBN: 0-7803-0823-9**
• **YAMAZAWA K ET AL: "Telepresence system with an omnidirectional HD camera" PROCEEDINGS OF THE FIFTH ASIAN CONFERENCE ON COMPUTER VISION ASIAN FEDERATION OF COMPUTER VISION SOC CLAYTON, VIC., AUSTRALIA, vol. 2, 25 January 2002 (2002-01-25), pages 533-538 vol.2, XP009044728 ISBN: 0-9580256-0-6**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

1. FIELD OF THE INVENTION:

The present invention relates to an omnidirectional visual system for processing an image represented by image data obtained by an omnidirectional camera using a hyperboloidal mirror to create perspective projection image data for display. The present invention also relates to an image processing method, a control program, and a readable recording medium, which are used with the same omnidirectional visual system.

2. DESCRIPTION OF THE RELATED ART:

Conventionally, in order for a visual sensor of a robot or a security camera to obtain information regarding a broad view field area, there has been a need for a camera capable of capturing an image of an up to 360° view field area therearound. Techniques of turning a video camera round or using a plurality of video cameras have been employed for obtaining an omnidirectional 360° view field image.

However, in the case of using a video camera(s), there are problems such that: creating an image for one frame takes time; there is a difficulty in processing jointed portions of images; and a driving section of a video camera needs maintenance. Therefore, there is a need for an omnidirectional camera capable of obtaining an image containing information regarding an up to 360° view field area around the camera at one time.

Thus, studies have been conducted for obtaining an omnidirectional camera capable of capturing an image containing information regarding an up to 360° view field area at one time by using a method for capturing an image based on light reflected by a convex mirror, such as a spherical mirror or a conical mirror, or a method for capturing an image using a fisheye lens. However, even with such an omnidirectional camera, there is still a difficulty in creating a perspective projection image, which can be seen as if the image is being captured by a video camera, in real time.

In order to solve such a problem, Japanese Laid-Open Patent Publication No. 6-295333. "Omnidirectional visual system", suggests: an omnidirectional camera capable of capturing an image containing information regarding an up to 360° view field area by using a two-sheeted hyperboloidal mirror; and a technique of performing a prescribed transformation based on the visual information to rapidly obtain a perspective projection image having a projection center at one of the focal points of the two-sheeted hyperboloidal mirror.

Studies have been eagerly carried out for obtaining an omnidirectional visual system capable of creating and displaying a perspective projection image in real time based on an image captured by an omnidirectional camera using a two-sheeted hyperboloidal mirror according to the above-mentioned technique, such that the perspective projection image has a projection center at a focal point of the two-sheeted hyperboloidal mirror and is inclined in an arbitrary direction represented by a pan angle, which indicates an angle in a horizontal direction, and a tilt angle which indicates an elevation angle or a depression angle.

A conventional omnidirectional camera using a two-sheeted hyperboloidal mirror and a method for creating a perspective projection image, which are described in Japanese Laid-Open Patent Publication No. 6-295333, will be described with reference to Figures **7** to **12.**

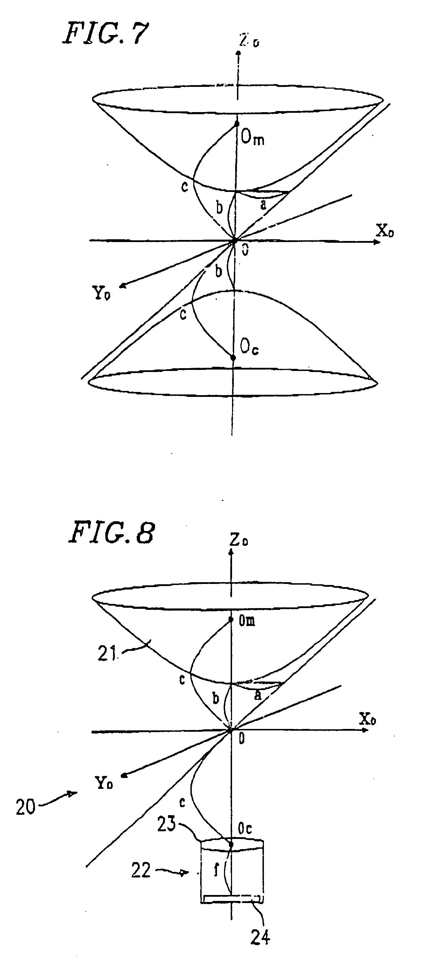

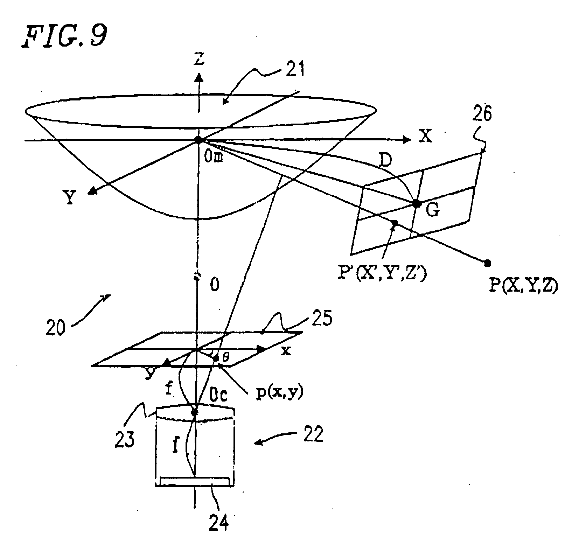

Firstly, the conventional omnidirectional camera using a two-sheeted hyperboloidal mirror will be described with reference to Figures **7** and **8**.

Figure **7** is a diagram illustrating a two-sheeted hyperboloid. As shown in Figure **7,** the two-sheeted hyperboloid refers to curved surfaces obtained by rotating hyperbolic curves around a real axis (a $Z_0$-axis). The two-sheeted hyperboloid has two focal points, i.e., focal point Om of one sheet of the two-sheeted hyperboloid and focal point Oc of the other sheet of the two-sheeted hyperboloid. Consider a three-dimensional coordinate system O-$X_0 Y_0 Z_0$ where the $Z_0$-axis is a vertical axis. The two focal points of the two-sheeted hyperboloid are located at (0, 0, +c) and (0, 0 , - c), respectively. The two-sheeted hyperboloid is represented by the following expression (1).

$$\frac{X_0^2 + Y_0^2}{a^2} - \frac{Z_0^2}{b^2} = -1$$

$$c = \sqrt{a^2 + b^2} \qquad \ldots \ldots (1),$$

where a and b are constants for defining the shape of the hyperbolic curve.

In the omnidirectional camera, one sheet of the two-sheeted hyperboloid, which is located in a region where $Z_0 > 0$, is utilized as a mirror.

Figure **8** is a schematic diagram of a conventional omnidirectional camera **20**. As shown in Figure **8,** the omnidirectional camera **20** includes a hyperboloidal mirror **21** provided so as to face downward in the vertical direction and positioned in the region where $Z_0 > 0$ and a camera **22** provided below the hyperboloidal mirror **21** so as to be face upward in the vertical direction. In this case, focal point Om of the hyperboloidal mirror **21** and principal point Oc of a lens **23** of the camera **22** are located at two focal points (0,0,+c) and (0,0,-c), respectively, of a two-sheeted hyperboloid. An imaging element **24**, such as a CCD imaging element or a CMOS imager, is provided so as to be located away from the lens principal point Oc by focal distance f of the lens.

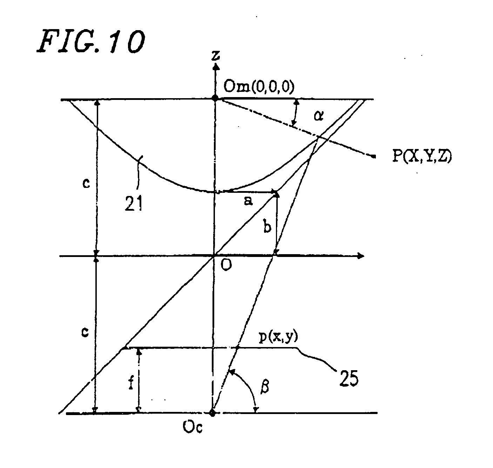

Next, a feature of an optical system of the omnidirectional camera **20** using the hyperboloidal mirror **21** and a method for creating a perspective projection image based on an image obtained by the omnidirectional camera **20** using the hyperboloidal mirror **21** will be described with reference to Figures **9** and **10**.

Figure **9** is a diagram for explaining the optical system shown in Figure **8** and a perspective projection image.

In an optical system configured as shown in Figure **9**, light traveling from the surroundings of the hyperboloidal mirror **21** toward focal point Om of the hyperboloidal mirror **21** is reflected by the hyperboloidal mirror **21**. The reflected light passes through the lens **23** and is converted into an image by the imaging element **24** such as a CCD. In Figure **9**, consider a three-dimensional coordinate system Om-XYZ, where focal point Om of the hyperboloidal mirror **21** is the origin and an optical axis of the lens **23** is a Z-axis, and a two-dimensional coordinate system xy.

As shown in Figure **9**, an xy plane of an image surface **25** has the origin at a point which is located on the Z-axis away from principal point Oc of the lens **23** by focal distance f of the lens **23** along the positive direction of the Z-axis, is the origin. The xy plane is perpendicular to the z-axis and horizontal with respect to an XY plane. In the xy plane of the image surface **25,** x- and y-axes respectively correspond to a long-side direction and a ahort-oide direction of the imaging element **24** (i.e., horizontal and vertical axes of an image), and X- and Y-axes of the Om-XYZ coordinate system are straight lines which are respectively parallel to the x-and y-axes. The omnidirectional camera **20** using the hyperboloidal mirror **21** captures an image based on light traveling from principal point Oc of the lens **23** via the image surface **25** and reflected by the hyperboloidal mirror **21**. An intersection point between the reflected light and the image surface **25** is represented by mapping point p(x,y).

Now, consider a location of mapping point p on the xy plane of light emitted from point P represented by the three-dimensional coordinate system Om-XYZ. Assume that a mapping point on the image surface **25** corresponding to an arbitrary point P(X,Y,Z) in the three-dimensional coordinate system is represented by p(x,y). In this case, light traveling from point P(X,Y,Z) toward focal point Om is reflected by the hyperboloidal mirror **21** so as to be directed to focal point Oc of the lens **23** and pass through point p(x,y) on the image surface **25,** thereby capturing an image. In tha omnidirectional camera **20** using a two-sheeted hyperboloidal mirror, light traveling from the point P toward focal point Om is entirely reflected by the hyperboloidal mirror **21** so as to be directed to principal point Oc of the lens **23,** and therefore light traveling along an elongation of line Om-P is entirely mapped onto mapping point p(x,y). In this case, a horizontal angle of the reflected light is maintained, and therefore an azimuth angle of point P, which is determined by Y/X, is obtained by calculating the azimuth angle θ of mapping point p determined by y/x.

Herein, the azimuth angle θ is referred to as a "pan angle" . Specifically, a pan angle along the positive direction of the X-axis is 0°, a pan angle along the negative direction of the X-axis is 180°, a pan angle along the positive direction of the Y-axis is 90°, and a pan angle along the negative direction of the Y-axis is 270°.

Figure **10** is a state diagram illustrating a vertical cross section including point P(X,Y,Z) and the Z-axis which are shown in Figure **9**. Assuming that the vertical cross section includes point P and the Z-axis in a coordinate system having the origin at Om(0,0,0), as shown in Figure **10**, there are relationships between point P and mapping point pas represented by the following expressions (2), (3), and (4).

$$Z = \sqrt{X^2 + Y^3} \tan \alpha \qquad \ldots \ldots (2)$$

$$\alpha = \tan^{-1} \frac{(b^2 + c^2)\sin \beta - 2bc}{(b^2 - c^2)\cos \beta} \qquad \ldots \ldots (3)$$

$$\beta = \tan^{-1}\left(\frac{f}{\sqrt{x^2 + y^2}}\right) \quad \cdots \quad (4)$$

Herein, an angle $\alpha$ shown in Figure **10** which can be represented by the above expression (3) is referred to as a "tilt angle" of point P. Specifically, an angle with respect to a plane satisfying Z=0, i.e., the tilt angle, can represent an elevation angle by a plus value and a depression angle by a minus value.

As described above, locating the principal point of the lens **23** of the camera **22** at focal position Oc of the hyperboloid, and therefore pan angle $\theta$ and tilt angle $\alpha$, which are made by the X-axis and a line extending from focal point Om of the hyperboloidal mirror 21 and point P, are uniquely obtained based on mapping point p(x,y). In this case, the following expressions (5) and (6) are obtained by transforming the above expressions (1) through (4) so as to calculate values of x and y.

$$x = \frac{Xf(b^2 - c^2)}{(b^2 + c^2)Z - 2bc\sqrt{X^2 + Y^2 + Z^2}} \quad \cdots \quad (5)$$

$$y = \frac{Yf(b^2 - c^2)}{(b^2 + c^2)Z - 2bc\sqrt{X^2 + Y^2 + Z^2}} \quad \cdots \quad (6)$$

The expressions (5) and (6) do not include a trigonometric function, and therefore calculation is readily performed. By assigning values of point P(X,Y,Z) in a three-dimensional environment to the above expressions (5) and (6), values of point p(x,y) on the image surface **25** corresponding to the point P can be rapidly obtained.

Next, a perspective projection image will be described.

Draw straight line Om-G extending from focal point Om of the hyperboloidal mirror **21** to point G in the three-dimensional coordinate system, which is located away from focal point Om by distance D, as shown in Figure **9,** and consider a perspective projection image surface **26** where straight line Om-G corresponds to a perpendicular line. Light traveling from point P(X,Y,Z) toward focal point Om crosses the perspective projection image surface **26** at point P'(X', Y',Z'). In this case, a perspective projection image refers to an image obtained by converting ambient information on the assumption that the perspective projection image surface **26** is a screen where a projection center is located at focal point Om of the hyperboloidal mirror **21,** and digital image data representing such a perspective projection image is referred to as "perspective projection image data".

Now, consider an image located at point P'(X',Y',Z') on the perspective projection image surface **26**. Due to characteristics of the hyperboloidal mirror **21,** such an image represents an object lying on an elongation of straight line Om-P'. In this case, when the object on the elongation of line Om-P' which is closest to the hyperboloidal mirror **21** is positioned at point P(X,Y,Z), the image at point P' on the perspective projection image surface **26** is obtained based on light from point P(X,Y,Z).

However, the light traveling along the elongation of straight line Om-P' is mapped to mapping point p (x,y) on the image surface **25**, and therefore by assigning values of point P'(X',Y',Z') to the above expressions (5) and (6), values of mapping point p(x,y) can be readily obtained without considering the location of point P(X,Y,Z). Therefore, mapping point p on the image surface **25** is sequentially obtained based on three-dimensional coordinates for each point on the perspective projection image surface **26**, thereby creating a perspective projection image.

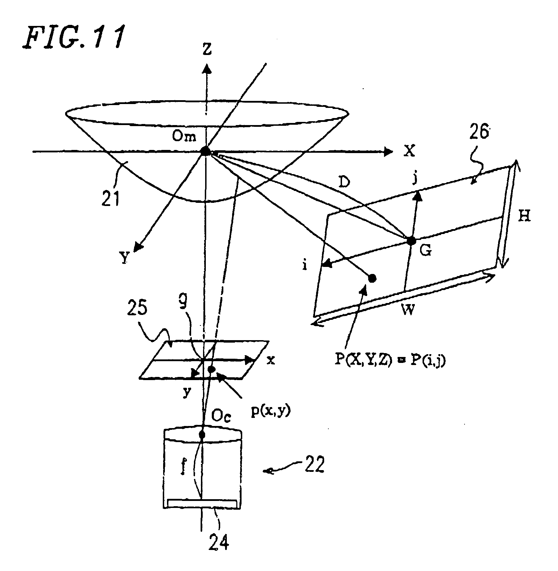

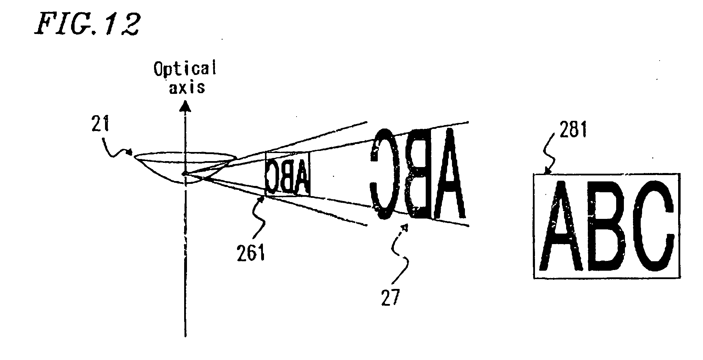

Next, a method for creating a perspective projection image will be described with reference to Figures **11** and **12** and with respect to the case where the camera **22** included in the omnidirectional camera **20** shown in Figure **9** is provided so as to have a vertical optical axis (i.e., the Z-axis is a vertical axis).

Figure **11** is a diagram for explaining the method for creating a perspective projection image in the case where the conventional camera **22** is provided so as to have an optical axis (the Z-axis) is a vertical axis. In Figure **11**, as in the case described in conjunction with Figure **9,** consider a three-dimensional coordinate system Om-XYZ where the origin is located at focal point Om of the hyperboloidal mirror **21**.

As shown in Figure **11,** the camera **22** is provided such that the z-axis, which is an optical axis of the hyperboloidal mirror **21,** is a vertical axis. In this case, an upward vertical direction along the Z-axis is positive. The image surface **25** corresponds to an input image obtained by the camera **22**. When considering a two-dimensional coordinate system (x, y) where the origin is located at an intersection point g between the optical axis of the hyperboloidal mirror **21** and the image surface **25**, the x-and y-axes are straight lines parallel to a long side and a short side, respectively, of the imaging element **24** of the camera **22** and the X- and Y-axes of the Om-XYZ coordinate system are parallel to the x- and y-axes, respectively.

The perspective projection image surface **26** is a plane where straight line Om-G is a perpendicular line. Consider a two-dimensional coordinate system (i,j) where the origin is located at point G, an i-axis is a horizontal axis parallel to the XY plane, and a j-axis is a vertical axis crossing the i-axis and Om-G-axis at an angle of 90°. The distance from the perspective projection image surface **26** to focal point Om of the hyperboloidal mirror **21** is D and the width and height of the perspective projection image surface **26** are W and H, respectively. In this case, the i-axis is always parallel to the XY plane, and therefore in a perspective projection image obtained when the Z-axis is a vertical axis, a horizontal surface is always displayed horizontally.

Herein, straight line Om-G and point G are referred to as the "transformation center axis" and the "transformation center point", respectively. The transformation center axis is represented by using pan angle θ, tilt angle ϕ, and distance D. The pan angle θ is made by the X-axis and straight line Om-G projecting onto the XY plane, and can be in the range of 0° to 360° which can be represented by the following expression (7).

$$\theta = \tan^{-1}\frac{Y}{X} = \tan^{-1}\frac{y}{x} \quad \ldots \ldots \ (7)$$

In this case, the above-mentioned tilt angle ϕ corresponds to an angle between the XY plane and straight line Om-G which can be in the range of -90° to +90°, where an angle between the XY plane and straight line Om-G running above the XY plane (Z>0) has a "+" value and an angle between the XY plane and straight line Om-G running below the XY plane (Z<0) has a "-" value. Distance D is the same as that previously described in conjunction with Figure **9**. An angle of view of a perspective projection image is determined based on distance D and the width Wand height H of the perspective projection image surface **26**.

Next, the procedure of creating the perspective projection image will be described.

At the first step, pan angle θ, tilt angle ϕ, and distance D of the transformation center axis are determined. Then, at the second step, values of coordinate P(X,Y,Z) in the three-dimensional coordinate system corresponding to two-dimensional coordinate point P(i,j) on the perspective projection image surface **26** are obtained. An expression for obtaining values of a point in the three-dimensional coordinate system based on pan angle θ, tilt angle ϕ, and distance D can be represented by the following expression (8).

$$X = R \cdot \cos\theta - i \cdot \sin\xi$$
$$Y = R \cdot \sin\theta + i \cdot \cos\theta$$
$$Z = D \cdot \sin\phi - j \cdot \cos\phi$$
$$(R = D \cdot \cos\phi + j \cdot \sin\phi) \quad \ldots \ldots \ (8)$$

Further, at the third step, values of point P(X,Y,Z) are assigned to the above expressions (5) and (6), thereby obtaining values of mapping point p(x,y) on the image surface **25** corresponding to point P(i,j) on the perspective projection image surface **26**.

In this manner, by obtaining values of points on the image surface **25** corresponding to all the points on the perspective projection image **26**, it is possible to create a perspective projection image where the projection center is located at focal point Om of the hyperboloidal mirror **21**.

Figure **12** is a diagram illustrating an example where an image of a horizontally-placed object "ABC" is captured by an omnidirectional camera using a hyperboloidal mirror which is provided so as to have an optical axis which is a vertical axis.

As shown in Figure **12**, when the optical axis of the camera **22** shown in Figure **11** is a vertical axis, an image obtained based on light traveling from a horizontally-placed object **27** on which letters "ABC" are written toward the hyperboloidal mirror **21** is viewed like a perspective projection image **281** on the assumption that a perspective projection image surface **261** is a screen. When the optical axis of the camera **22** is a vertical axis, a lateral axis of the perspective projection image surface **261** is a horizontal axis. Therefore, when the horizontally-placed object **27** is viewed, the object **27** is displayed as a horizontally-placed object in the perspective projection image **281**.

The above-described conventional omnidirectional visual system has been developed on the assumption that the perspective projection image **281** is created and displayed with the camera **22** included in the omnidirectional camera **20** being provided so as to have an optical axis which is always present in a vertical direction. However, due to a characteristic of the omnidirectional camera **20** using a convex mirror, light reflected by the camera **22** itself is converted into an image, and therefore there is a problem that a region positioned substantially directly below the camera **22** becomes a blind spot when capturing an image around the conventional omnidirectional visual system.

In order to capture an image of a conventionally-blinded region positioned substantially directly below the omnidirectional visual system using the hyperboloidal mirror **21,** it is conceivable that the omnidirectional camera **20** itself is provided in an inclined manner so as to project an image of a region positioned substantially directly below the system onto the hyperboloidal mirror **21** and mapping data for the projected image is used as image data.

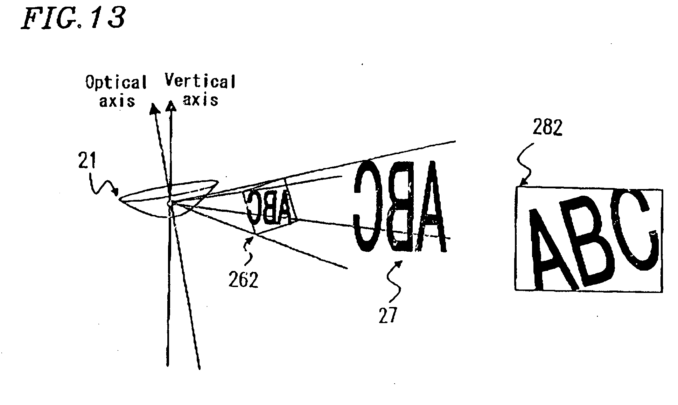

Figure **13** is a diagram for explaining a method for creating a perspective projection image in the case where an omnidirectional camera is provided such that an optical axis (a Z-axis) thereof is inclined.

In Figure **13**, as in the case described in conjunction with Figure **12,** an image obtained based on light traveling from the object **27** on which letters "ABC" are written toward the hyperboloidal mirror **21** is viewed like a perspective projection image **282** on the assumption that a perspective projection image surface **262** is a screen.

In this case, the optical axis is inclined with respect to a vertical axis, and thus when the conventional method for creating a perspective projection image is used, the projection image surface **262** is inclined such that the inclination of the projection image surface **262** is interlocked with that of the optical axis. Therefore, as shown in Figure 32, in the perspective projection image **282** created on the assumption that the perspective projection image surface **262** is a screen, the horizontally-placed object **27** is displayed as if the object is inclined.

Moreover, since a tilt angle of the camera **22** included in the omnidirectional camera **20** is made by the XY plane and the transformation center axis, in the case where the optical axis is a vertical axis, an elevation angle and a depression angle are accurately represented such that a tilt angle having a plus value is an elevation angle and a tilt angle having a minus value is a depression angle. Therefore, by designating pan angle θ, tilt angle φ, and distance D, it is possible to create a prescribed perspective projection image. However, in the case where the optical axis is inclined, the XY plane is also inclined with respect to a horizontal plane, and therefore even when pan angle θ, tilt angle φ, and distance D are designated as in the conventional case, a perspective projection image **282** that would be created has a different tilt angle as compared with a perspective projection image **282** created in accordance with a conventional method.

Specifically, in the conventional omnidirectional visual (camera) system, when the camera **22** is provided so as to have an optical axis inclined with respect to a vertical axis for the purpose of eliminating a blind region positioned substantially directly below the camera **22**, a perspective projection image **282** that would be created is inclined with respect to the horizontal plane. Therefore, there is a problem that an image as normally seen with the naked eye cannot be obtained.

The paper "Visual Surveillance and Monitoring System Using an Omnidirectional Video Camera" by Yoshio Onoe, Naokazu Yokoya, Kazumasa Yamazawa, and Haruo Takemura Proceedings Fourteenth Int. Conf. on Pattern Recognition, 16-20 Aug. 1998, Brisbane, QPd., Australia, Vol. 1, pages 588-592 discusses a visual surveillance and monitoring system based upon omnidirectional imaging.

SUMMARY OF THE INVENTION

According to the present invention there is provided an omnidirectional visual system for creating perspective projection image data for display by processing image data transmitted by an omnidirectional camera using a hyperboloidal mirror, the system comprising a coordinate processing section for transforming three-dimensional coordinates, which indicate each point of the perspective projection image data in a first coordinate system, in accordance with an angle of inclination of the optical axis of the hyperboloidal mirror with respect to a vertical axis into new three-dimensional coordinates indicating corresponding points of a transformed perspective projection image data in a second coordinate system rotated relative to the first coordinate system in a direction opposite to the direction of said inclination.

In one embodiment of the invention, when the optical axis of the omnidirectional camera corresponds to a Z-axis of an XYZ three-dimensional coordinate system where X, Y, and Z-axes are perpendicular to one another at a focal point of the hyperboloidal mirror as the origin, the coordinate rotation processing section obtains new three-dimensional coordinate based on each piece of the angle information obtained by decomposing an angle of inclination of the Z-axis with respect to the vertical axis into a rotation angle in the case where the X-axis is used as a rotation axis, a rotation angle in the case where the Y-axis is used as a rotation axis, and a rotation angle in the case where the Z-axis is used as a rotation axis.

In another embodiment of the invention, the X- and Y-axes of an XY plane in the XYZ three-dimensional coordinate system are parallel to a long side and a short side, respectively, of an imaging element of the omnidirectional camera.

In still another embodiment of the invention, the coordinate rotation processing section is a single-axial or two-axial coordinate rotation processing section which uses at least either the X- or Y-axis as a rotation angle.

Preferably, the omnidirectional visual system further comprises: an omnidirectional camera for capturing an image based on image light which is obtained by collecting light reflected by a hyperboloidal mirror; and an image processing section for creating, based on input image data obtained by the omnidirectional camera, perspective projection image data for display which represents a perspective projection image in which a projection center is located at a focal point of the hyperboloidal mirror, wherein the omnidirectional camera is provided such that an optical axis thereof is inclined with respect to a vertical axis by a prescribed angle, and wherein the image processing section creates perspective projection image data for display capable of horizontally displaying the perspective projection image.

In one embodiment of the invention, when the optical axis of the omnidirectional corresponds to a Z-axis of an XYZ three-dimensional coordinate system where X, Y, and Z-axes are perpendicular to one another at a focal point of the hyperboloidal mirror as the origin, the coordinate rotation processing obtains new three-dimensional coordinates based on each piece of angle information obtained by decomposing an angle of inclination of the Z-axis with respect to the vertical axis into a rotation angle in the case where the X-axis is used as a rotation axis, a rotation angle in the case where the Y-axis is used as a rotation axis, and a rotation angle in the case wherein Z-axis is used as a rotation axis.

In another embodiment of the invention, the X- and Y-axes of an XY plane in the XYZ three-dimensional coordinate system are parallel to a long side and a short side, respectively, of an imaging element of the omnidirectional camera.

In still another embodiment of the invention, the coordinate rotation processing section is a single-axial or two-axial coordinate rotation processing section which uses at least either the X- or Y-axis as a rotation angle.

In still another embodiment of the invention, the image processing section is capable of, responsive to a manipulation of a pan angle for a perspective projection image, sequentially creating data for a perspective projection image where a tilt angle is invariable since a vertical axis passing through a focal point of the hyperboloidal mirror is used as a rotation angle.

According to the present invention there is provided an image processing method comprising the steps of: performing processing for obtaining three-dimensional coordinates, which indicate each point of a perspective projection image data in a first coordinate system, based on image data transmitted by an omnidirectional camera using a hyperboloidal mirror; and performing coordinate rotation processing for transforming said three-dimensional coordinates which indicate at each point of the perspective projection image data in a first coordinate system, in accordance with an angle of inclination of the optical axis of the hyperboloidal mirror with respect to the vertical axis into new three-dimensional coordinates indicating corresponding points of a transformed perspective projection image data in a second coordinate system rotated relative to the first coordinate system in a direction opposite to the direction of said inclination.

In one embodiment of the invention, when the when the optical axis of the omnidirectional camera corresponds to a Z-axis of an XYZ three-dimensional coordinate system where X, Y, and Z-axes are perpendicular to one another at a focal point of the hyperboloidal mirror as the origin, the coordinate rotation processing obtains new three-dimensional coordinates based on rotational determinates obtained by assigning the angle of inclination of the Z-axis with respect to the vertical axis so as to determine an angle of rotation around the X-axis, an angle of rotation around the Y-axis and an angle of rotation around the Z-axis.

According to still another aspect of the present invention, there is provided a control program for allowing a computer to execute each processing procedure of the image processing method of the third aspect of the present invention.

According to still another aspect of the present invention, there is provided a computer-readable recording medium having the control program of the fourth aspect of the present invention recorded therein.

With the above configuration, a three-dimensional coordinate system where each point on a perspective projection image is designated is rotated along a direction opposite to a direction of inclination of the optical axis with respect to the vertical axis by an angle of inclination of the optical axis, so as to obtain a new three-dimensional coordinate system. Therefore, even when the optical axis is inclined with respect to the vertical axis by a prescribed angle, it is possible to create perspective projection image data for allowing a perspective projection image to be displayed such that a horizontally-placed object in the perspective projection image is horizontally displayed as if the object is seen with the naked eye.

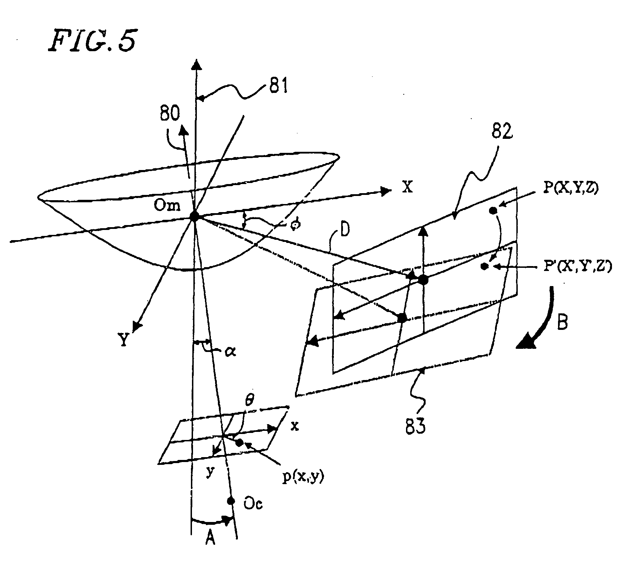

Hereinbelow, the function of the present invention will be described in detail with respect to Figure **5**.

Figure **5** is a diagram for explaining a perspective projection image surface data for an omnidirectional camera in which an optical axis thereof is inclined with respect to a vertical axis.

In Figure 5, assume that pan angle $\theta$, tilt angle $\phi$, and distance D are designated in order to create perspective projection image surface data. A perspective projection image surface **82** is created such that an inclined optical axis **80** corresponds to a Z-axis. A perspective projection image surface **83** is created such that a vertical axis **81** corresponds to the Z-axis. The perspective projection image surface **83** corresponds to a conventional perspective projection image surface. Specifically, the perspective projection image surface **82** is obtained by inclining the perspective projection image surface **83** by a degree of inclination of the optical axis **80** with respect to the vertical axis **81** (by an angle of inclination $\alpha$).

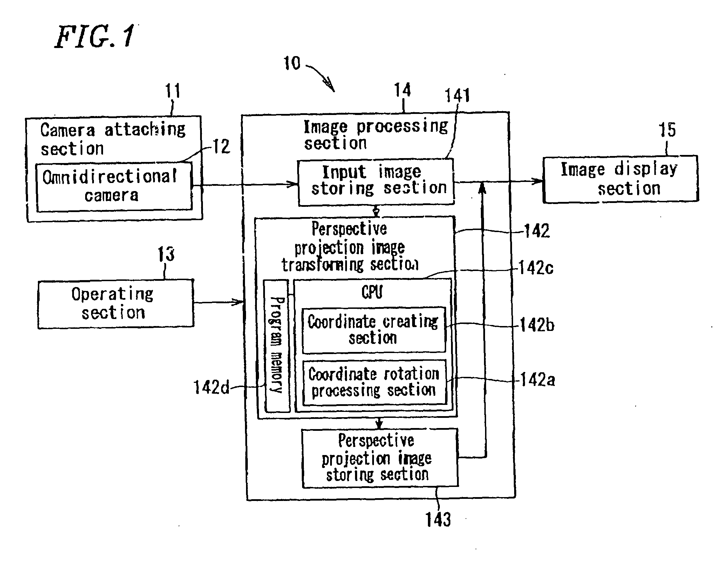

According to an embodiment of the present invention, coordinates of each point P(X,Y,Z) on the perspective projection image surface **82** in a three-dimensional coordinate system are obtained on the assumption that the perspective projection image surface **82** uses the optical axis **80** as a reference axis based on pan angle $\theta$, tilt angle $\phi$, and distance D. Then, values of point P'(X',Y',Z') on the perspective projection image surface **83** corresponding to point P(X,Y,Z) on the perspective projection image surface **82** are obtained. As shown in Figure **5**, the perspective projection image surface **83** is obtained by using a coordinate rotation processing section **142a** (Figure 1) to incline the perspective projection image **82** along direction **B** opposite to direction **A** along which the optical axis **80** is inclined with respect to the vertical axis **81** by an angle of inclination $\alpha$, i.e., by using the coordinate rotation processing section **142a** to perform coordinate rotation. The above-described operation is sequentially repeated to obtain coordinates of each point on the perspective projection image surface **83**. By assigning values of each point P'(X',Y',Z') on the perspective projection image surface **83** to the above expressions (5) and (6), it is possible to create perspective projection image data for allowing a target subject (an object) to be displayed in a horizontal manner even when the omnidirectional camera **12** is provided such that the optical axis thereof is inclined by a prescribed angle of inclination $\alpha$.

Therefore, it is possible to transform the vertically-set perspective projection image surface **82** into the conventional perspective projection image surface **83** (i.e., it is possible to perform coordinate rotation processing) and create perspective projection image data based on the conventional perspective projection image surface **83**. Similar to the conventional case, by designating pan angle $\theta$ and tilt angle $\phi$ with respect to the vertical axis **81,** it is possible to horizontally display a horizontally-placed object on a display screen as if the object is seen with the naked eye.

In general, an inclination of an object can be divided into rotation angles in an O-XYZ three-dimensional coordinate system where a rotation center corresponds to the origin, i.e., an angle of rotation about the X-axis, an angle of rotation about the Y-axis, and an angle of rotation about the Z-axis.

The following are rotation determinants (expressions 9 through 11) for obtaining values of point P'(X',Y',Z') corresponding to a point obtained by inclining point P(X,Y,Z) on the O-XYZ three-dimensional coordinate system by an angle of $\alpha$ degrees around the X-axis, an angle of $\beta$ degrees around the Y-axis, and an angle of $\gamma$ degrees around the Z-axis.

$$\begin{pmatrix} X' \\ Y' \\ Z' \end{pmatrix} = \begin{pmatrix} 1 & 0 & 0 \\ 0 & \cos\alpha & \sin\alpha \\ 0 & -\sin\alpha & \cos\alpha \end{pmatrix} \begin{pmatrix} X \\ Y \\ Z \end{pmatrix} \quad \dots \dots (9)$$

$$\begin{pmatrix} X' \\ Y' \\ Z' \end{pmatrix} = \begin{pmatrix} \cos\beta & 0 & -\sin\beta \\ 0 & 1 & 0 \\ \sin\beta & 0 & \cos\beta \end{pmatrix} \begin{pmatrix} X \\ Y \\ Z \end{pmatrix} \quad \dots \dots (10)$$

$$\begin{pmatrix} X' \\ Y' \\ Z' \end{pmatrix} = \begin{pmatrix} \cos\gamma & \sin\gamma & 0 \\ -\sin\gamma & \cos\gamma & 0 \\ 0 & 0 & 1 \end{pmatrix} \begin{pmatrix} X \\ Y \\ Z \end{pmatrix} \quad \dots \dots (11)$$

In this case, according to the above rotation determinants (expressions (9), (10), and (11)), values of point P' (X',Y',Z'), which corresponds to a point obtained by rotating point P(X,Y,Z) about the X-, Y-, and Z-axes along a direction opposite to a direction of inclination of the optical axis of the omnidirectional camera **12**, are obtained in order to create data for a perspective projection image which is horizontal with respect to a horizontal plane. For example, when the omnidirectional camera **12** is inclined by an angle of $\alpha$ degrees around the X-axis, an angle of $\beta$ degrees around the Y-axis, and an angle of $\gamma$ degrees around the Z-axis, point P'(X',Y',Z') can be obtained by assigning -$\alpha$, -$\beta$, and -$\gamma$ to a determinant into which rotating matrices of expressions (9) through (11) are combined.

However, as described above, in practice, there is a difficulty in determining an angle of rotation about each of the X-, Y-, and Z-axes based on an image captured by the omnidirectional camera **12,** and there is a problem that computing complexity is increased by making calculations to determine angles of rotation about the X-, Y-, and Z-axes.

A perspective projection image obtained by an omnidirectional camera is intended to contain information regarding a 360° view field area around the omnidirectional camera, and therefore in the case where the purpose of obtaining the perspective projection image is only to create perspective projection image data for horizontally displaying a horizontally-placed object, when an optical axis of the omnidirectional camera corresponds to the Z-axis, an angle of rotation about the Z-axis maybe ignored. Naturally, an omnidirectional camera configured such that the Z-axis is not rotatable may be employed. Accordingly, it is possible to reduce computing complexity by ignoring expression (11).

Moreover, when employing a mechanism which can be rotated by a prescribed angle about a rotation axis corresponding to an axis parallel to either a longitudinal axis or a lateral axis of an imaging element included in the omnidirectional camera, only an expression for determining an angle of rotation about the X- or Y-axis is required, and therefore the computing complexity can be further reduced.

Thus, the invention described herein makes possible the advantage of providing: an omnidirectional visual system capable of obtaining perspective projection image data for horizontally displaying an object, which is horizontally placed around the system, as if the object is seen with the naked eye, even if an omnidirectional camera is provided such that an optical axis thereof is inclined with respect to a horizontal plane for the purpose of capturing an image of a region positioned substantially directly below the omnidirectional camera; an image processing method for use with the same system; a control program for use with the same system; and a readable recording medium for use with the same system.

This and other advantages of the present invention will become apparent to those skilled in the art upon reading and understanding the following detailed description with reference to the accompanying figures.

BRIEF DESCRIPTION OF THE DRAWINGS

Figure **1** is a block diagram showing a primary structure of an omnidirectional visual system according to an embodiment of the present invention.

Figure **2** is a schematic perspective view illustrating an example of providing an omnidirectional camera having an optical axis inclined only around an x-axis.

Figure **3** is a diagram showing an exemplary input image transmitted by an omnidirectional camera shown in Figure **1**.

Figure **4** is a diagram showing an exemplary perspective projection image created by a perspective projection transformation section shown in Figure **1**.

Figure **5** is a diagram for explaining a perspective projection image surface of an omnidirectional camera in which an optical axis is inclined with respect to a vertical axis.

Figure **6** is a flowchart showing the operation of creating perspective projection image data in the omnidirectional visual system shown in Figure **1** for obtaining data for an image represented by an arbitrary point on a perspective projection image.

Figure **7** is a diagram illustrating a two-sheeted hyperboloid.

Figure **8** is a schematic diagram of a conventional omnidirectional camera.

Figure **9** is a diagram for explaining an optical system shown in Figure **8** and a perspective projection image.

Figure **10** is a diagram illustrating a cross section including point P and a Z-axis which are shown in Figure **9**.

Figure **11** is a diagram for explaining a method for creating a perspective projection image in the case where a conventional omnidirectional camera is provided so as to have an optical axis (a Z-axis) is a vertical axis.

Figure **12** is a diagram illustrating a conventional exemplary perspective projection image obtained by capturing an image of a horizontally-placed object "ABC" by an omnidirectional camera using a hyperboloidal mirror which is provided so as to have an optical axis which is a vertical axis.

Figure **13** is a diagram for explaining a method for creating a conventional perspective projection image in the case where an omnidirectional camera is provided such that an optical axis (the Z-axis) thereof is inclined.

DESCRIPTION OF THE PREFERRED EMBODIMENTS

Hereinafter, an omnidirectional visual system according to the present invention will be described with reference to the accompanying drawings and with respect to embodiments of an omnidirectional camera system for creating perspective projection image data such that a horizontally-placed object is displayed in a horizontal manner even when an omnidirectional camera is provided such that an optical axis thereof is inclined.

Figure **1** is a block diagram showing a primary structure of an omnidirectional visual system according to an embodiment cf the present invention.

In Figure **1,** an omnidirectional visual system **10** includes: a camera attaching section **11**; an omnidirectional camera **12** provided to the camera attaching section **11** so as to be freely inclined; a operating section **13** for allowing a user to perform an input operation; an image processing section **14**; and an image display section **16**.

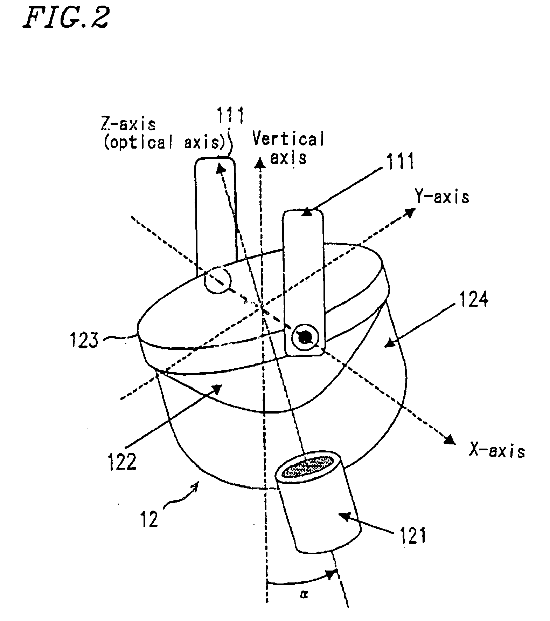

As shown in Figure **2**, the camera attaching section **11** includes a pair of camera attaching members **111**. One end of each camera attaching member **111** is fixed on a ceiling, a wall, or the like, and the other end thereof is attached to the omnidirectional camera **12**, so that the omnidirectional camera **12** is sandwiched between the pair of camera attaching members **111**. Specifically, the pair of camera attaching members **111** fix the omnidirectional camera **12** in an axial direction parallel to the X-axis shown in Figure **2** while supporting the omnidirectional camera **12** so as to be rotatable about the X-axis. With this configuration, the omnidirectional camera **12** is rotatable about a single axis (the X-axis in the present embodiment) such that an optical axis thereof (a Z-axis) is inclined with respect to a vertical axis by a prescribed angle of $\alpha$ degrees.

The omnidirectional camera **12** includes: a CCD camera **121** including a collecting lens and a CCD imaging element; a hyperboloidal mirror **122** for collecting ambient light for an image of a 360° view field area in one direction; a mirror holder **123** for holding the hyperboloidal mirror **122**; and a transparent holding body **124** for covering the hyperboloidal mirror **122** attached to the mirror holder **123**. The omnidirectional camera **12** transmits input image data obtained based on the ambient light for an image of a 360° view field area captured by the omnidirectional camera **12** itself to the image processing section **14**. In this case, the above-described X-axis refers to a straight line which is parallel to a long (or short) side of the imaging element (corresponding to the imaging element **24** shown in Figure **11**) of the CCD camera **121** and perpendicularly crosses the vertical axis and the optical axis. The pair of the camera attaching members **111** are attached to the outer circumference of the mirror holder **123**.

The operating section **13** is a user interface with the image processing section **14** and includes a keyboard or a dedicated controller. The operating section **13** allows a user to perform an input operation so as to change a variety of parameters such as pan angle $\theta$, tilt angle $\phi$, and zoom distance D for a perspective projection image, and an angle of inclination $\alpha$ of the optical axis. It should be noted that in the case where the angle of inclination $\alpha$ is not a zero-degree angle, the omnidirectional camera **12** is provided such that the optical axis thereof (the Z-axis) is inclined, and in the case where the angle of inclination $\alpha$ is a zero-degree angle, the omnidirectional camera **12** is provided such that the optical axis thereof (the Z-axis) is not inclined, i.e., the optical axis is present in a vertical direction.

The image processing section **14** includes an input image storing section **141**, a perspective projection image transforming section **142,** and a perspective projection image storing section **143**. The image processing section **14** temporarily stores input image data transmitted by the omnidirectional camera **12** in a prescribed input image storage region of the input image storing section **141**. The image processing section **14** can send perspective projection image data through the perspective projection image transformation section **142** to the perspective projection image storing section **143** for storage based on the input image data stored in the input image storing section **141** and a user input operation (a variety of parameters such as pan angle $\theta$, tilt angle $\phi$, zoom distance D, and an angle of inclination $\alpha$ of the optical axis). The input image data and the perspective projection image data can be transmitted to the image display section **15** by the image processing section **14**. It should be noted that the input image storing section **141** and the perspective projection image storing section **143** each use a high-speed data rewritable memory.

The perspective projection image transformation section **142** includes a coordinate rotation processing section **142a** and creates perspective projection image data based on the input image data transmitted by the omnidirectional camera **12** provided such that the optical axis thereof is inclined with respect to the vertical axis. In this case, coordinate rotation processing by the coordinate rotation processing section **142a** allows coordinate transformation, for example, such that a horizontally-placed object is horizontally displayed on the image display section **15** and perspective projection image data for display le obtained based on the transformed coordinates. Specifically, the coordinate rotation processing section **142a**, which will be described in detail later since it is one of features of the present invention, rotates three-dimensional coordinates, which indicate each point on a perspective projection image, along a direction opposite to a direction of inclination of the optical axis with respect to the vertical axis by an angle of inclination $\alpha$ of the optical axis, so as to horizontally display a horizontally-placed object, thereby obtaining new three-dimensional coordinates. Unlike a conventional method, the coordinate rotation processing section **142a** does not calculate a three-dimensional position of a perspective projection image surface using an XYZ coordinate system where the optical axis corresponds to the Z-axis for the purpose of creating a perspective projection image horizontal with respect to the horizontal plane even with the optical axis of the omnidirectional camera **12** being inclined. However, in order to create such a perspective projection image, the coordinate rotation processing section **142a** calculates three-dimensional coordinates of the perspective projection image surface based on the X-, Y-, and Z-axes, where the Z-axis corresponds to the vertical axis.

The image display section **15** includes a CRT or a liquid crystal monitor (a liquid crystal display device) and displays the above-described input image data or perspective projection image data as an image.

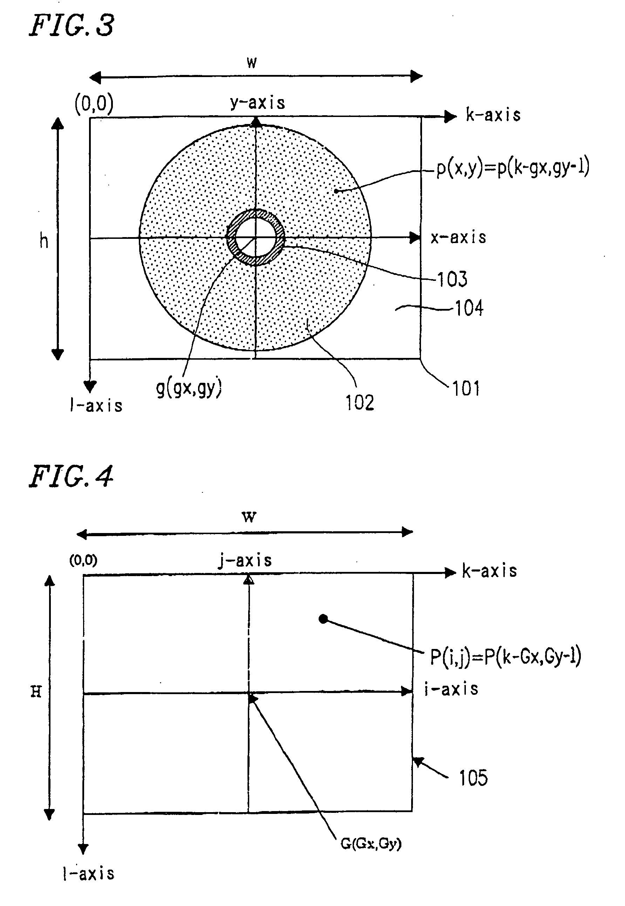

The input image data transmitted by the omnidirectional camera **12** will now be described in further detail with reference to Figure **3**.

As shown in Figure **3,** an input image **101** has a k-axis along a lateral axis direction from the origin (0,0) at the upper left corner to the right side and an 1-axis along a vertical axis direction from the origin downwards. The width and height of the input image **101** are w and h, respectively. A reflection image region **102** corresponds to a captured image of a 360° view field area around the omnidirectional visual system **10** which is obtained based on light reflected by the hyperboloidal mirror **122**. A blindregion **103** corresponds to a region blinded by a camera device itself, i.e., an imaging device including a camera collecting lens or an imaging element. A direct input region **104** corresponds to a region on which light reflected by the hyperboloidal mirror **122** is not cast and to an image directly captured by the camera device (the imaging device). Center point g(gx,gy) shown in Figure **3** corresponds to a coordinate indicating the lens center through which the optical axis (the Z-axis) passes. An xy plane, where the x-axis extends from central point g(gx,gy) as the origin toward the right side long a lateral axis and the y-axis extends from the origin upwards along a vertical axis, corresponds to the image surface **25** shown in Figure **11**. In this case, point p(x,y) of the xy coordinate system in the input image **101** can be represented by point p(k-gx,gy-l) of the kl coordinate system in the input image **101**.

Next, perspective projection image data creation processing performed by the perspective projection transformation section **142** will be described using an exemplary perspective projection image shown in Figure **4**.

In Figure 4, a perspective projection image **105** is created under the conditions for the perspective projection image surface **26** shown in Figure **11**. The perspective projection image **105** has a k-axis extending along a lateral axis direction from the origin (0,0) at the upper left corner to the right side and an 1-axis along a vertical axis direction from the origin downwards. The width and height of the perspective projection image **105** are W and H, respectively. Transformation center point G(Gx,Gy) corresponds to point G shown in Figure **11** and is directly represented by pan angle θ, tilt angle φ, and distance D. An i-axis is provided so as to extend from point G(Gx,Gy) as the origin to the right side along a lateral axis and a j-axis is provided so as to extend from point G(Gx,Gy) downwards along a vertical axis. Points on the perspective projection image surface **26** shown in Figure **11** are represented by using coordinates of i and j. In this case, point P(i,j) in the ij coordinate system can be represented by point P(k-Gx,Gy-l) in the kl coordinate system and by point P(X,Y,Z) in the XYZ coordinate system shown in Figure **5**.

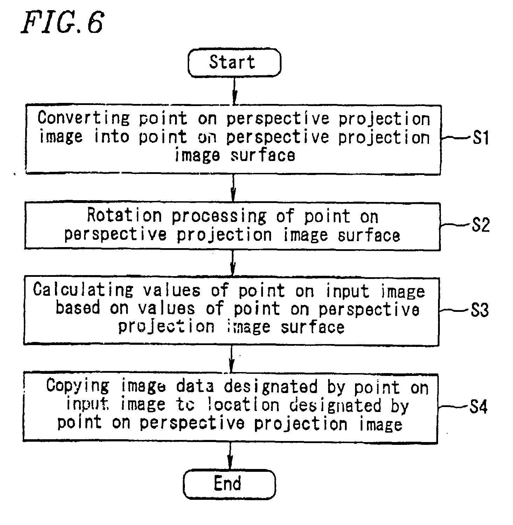

With the above configuration, the operation of creating the perspective projection image data will be described below with reference to Figures **5** and **6**.

Figure **6** is a flowchart showing the operation of creating the perspective projection image data for obtaining data for an image represented by an arbitrary point on the perspective projection image.

As shown in Figure **6,** at step S1, coordinates on the i- and j-axes in the perspective projection image are obtained based on values of point P(k,I) on the perspective projection image shown in Figure **4.** As described above, coordinates of point P(i,j) are represented as P(i,j)-P(k-Gx,Gy-1). Values of point P(X,Y,Z) on a perspective projection image surface **82** using an optical axis **80** as a reference axis shown in Figure **5** are obtained based on the coordinates of point P(i,j) by using the above expression (8).

Next, at step S2, values of point P'(X',Y',Z') on a perspective projection image surface **83** corresponding to point P(X,Y,Z) on the perspective projection image surface **82** using the optical axis **80** as a reference axis are obtained. As shown in Figure **5**, the perspective projection image surface **83** is obtained by inclining the perspective projection image **82** along direction B opposite to direction **A** along which the optical axis **80** of the omnidirectional camera **12** is inclined with respect to a vertical axis **81**. In the present embodiment, assuming that the omnidirectional camera **12** is provided such that the optical axis **80** is inclined with respect to the vertical axis **81** by an angle of α degrees about the X-axis, by assigning a value of -α to a coordinate rotation expression (9), it is possible to obtain values of a point on a perspective projection image surface obtained by inclining the original perspective projection image surface along a direction opposite to a direction along which an optical axis is inclined with respect to a vertical axis. When assigning the value of -α to the coordinate rotation expression (9), the following expression (12) is obtained.

$$\begin{pmatrix} X' \\ Y' \\ Z' \end{pmatrix} = \begin{pmatrix} 1 & 0 & 0 \\ 0 & \cos\alpha & -\sin\alpha \\ 0 & \sin\alpha & \cos\alpha \end{pmatrix} \begin{pmatrix} X \\ Y \\ Z \end{pmatrix} \quad \ldots\ldots (12)$$

When expanding the above expression (12), the following expression (13) is obtained.

$$X' = X$$

$$Y' = Y\cdot\cos\alpha - Z\cdot\sin\alpha$$

$$Z' = Y\cdot\sin\alpha + Z\cdot\cos\alpha \quad \ldots\ldots(13)$$

In the present embodiment, rotation processing is performed based on the above expression (13) so as to obtain values of point P'(X',Y',Z') on the perspective projection image surface **83** using the vertical axis **81** as a reference axis.

Further, at step S3, values of the three-dimensional coordinate P'(X',Y',Z') after the coordinate rotation processing has been performed are assigned to the expressions (5) and (6) to calculate values of point p(x,y) on the input image shown in Figure 5.

Lastly, at step S4, point p(x,y) on the image surface is converted into point p (k, l) in the kl coordinate system. Coordinates of point p(k,l) are represented as point p(x+gx,gy-y). Image data designated by point p(k,l) is obtained from the input image storing section **141** and copied to a location in the perspective projection image storing section **143** which is designated by point p (k,l) on the perspective projection image.

In the above-described manner, according to the flowchart shown in Figure **6**, points on an input image corresponding to all the points on a perspective projection image are obtained to copy image data, thereby creating a perspective projection image. Such a perspective projection image is sequentially created and displayed on the image display section **15**, thereby processing dynamic images.

The present embodiment has been described with respect to the case where the X-axis is the single axis about which the omnidirectional camera **12** can rotate when the omnidirectional camera **12** is provided such that the optical axis thereof (the Z-axis) is inclined. However, the present invention is not limited to this. The Y-axis may be the single axis about which the omnidirectional camera **12** can rotate. Moreover, the omnidirectional camera **12** may rotate about two axes, i.e., the X- and Y- axes. It is advantageous for the omnidirectional camera **12** to rotate only about the X- or Y-axis, i.e., a single axis, as in the case described above, since the computational complexity of coordinate rotation processing is reduced as compared to the case where the omnidirectional camera **12** rotates about two or three axes.

Alternatively, in the case where the omnidirectional camera **12** rotates about, for example, three axes, when the optical axis of the omnidirectional camera **12** is used as the Z-axis of the three-dimensional coordinate system where the X-, Y-, and Z-coordinate axes are perpendicular to one another at a focal point of the hyperboloidal mirror **122** as the origin, it is possible to obtain now three-dimensional coordinates based on each piece of angle information obtained by decomposing an angle of inclination of the Z-axis with respect to the vertical axis into a rotation angle in the case where the X-axis is used as a rotation axis, a rotation angle in the case where the Y-axis is used as a rotation axis, and a rotation angle in the case where the Z-axis is used as a rotation axis.

Although the present embodiment has not been described in particular regarding the specific configuration of the perspective projection transformation section **142**, the perspective projection transformation section **142** may be a microcomputer including a program or may be a dedicated IC chip.

As shown in Figure **1**, the perspective projection transformation section **142** includes a CPU (central processing unit) **142c** (a control section), such as a microcomputer, an MPU (microprocessing unit), or the like. The perspective projection transformation section **142** performs each step of an image processing method of the present invention based on a computer-executable control program stored in a program memory and a variety of types of data. The control program according to the present invention includes: a coordinate creating step of creating coordinates of a perspective projection image to obtain three-dimensional coordinates, which indicate each point on the perspective projection image, based on image data transmitted by the omnidirectional camera **12** using the hyperboloidal mirror **122**; and a coordinate rotating step of obtaining new three-dimensional coordinates by rotating the three-dimensional coordinates created at the coordinate creating step by an angle of inclination of an optical axis along a direction opposite to a direction of the inclination of the optical axis with respect to a vertical axis. The coordinate creating step and the coordinate rotating step are performed by a coordinate creating section **142b** and the coordinate rotation processing section **142a**, respectively. In the case where the optical axis of the omnidirectional camera **12** is used as the Z-axis of the three-dimensional coordinate system where the X-, Y-, and Z -coordinate axes are perpendicular to one another at a focal point of the hyperboloidal mirror **122** as the origin, the coordinate rotating step obtains new three-dimensional coordinates based on each piece of angle information obtained by decomposing an angle of inclination of the Z-axis with respect to the vertical axis into a rotation angle in the case where the X-axis is used as a rotation axis, a rotation angle in the case where the Y-axis is used as a rotation axis, and a rotation angle in the case where the Z- axis is used as a rotation axis. A computer-readable recording medium (a program memory **142d**) having the control program of the present invention recorded therein is, for example, a ROM (including a CD-ROM), an EPROM, an EEPROM, or the like, and functions as a storage section of the omnidirectional visual system **10**.

As described above, according to the present invention, even when an omnidirectional camera is provided such that an optical axis thereof is inclined with respect to a horizontal plane, by coordinate-rotating the perspective projection image surface along a direction opposite to a direction cf inclination of the optical axis, it is possible to provide perspective projection image data for horizontally displaying a horizontally-placed object as if the object is seen with the naked eye. Thus, even when the omnidirectional camera is provided in an inclined manner in order to capture an image of a region located substantially directly below the omnidirectional camera, it is possible to display a perspective projection image, in which a horizontally-placed object is displayed horizontally as if the object is seen with the naked eye, by performing operations similar to those performed in a conventional omnidirectional visual system.

**Claims**

1. An omnidirectional visual system (10) for creating perspective projection image data for display by processing image data transmitted by an omnidirectional camera (12) using a hyperboloidal mirror (122), the system comprising a coordinate processing section (142a) for rotating three-dimensional coordinates (X, Y, Z), which indicate each point (P) of the perspective projection image data in a first coordinate system (82), in accordance with an angle of inclination ($\alpha$) of the optical axis (80) of the hyperboloidal mirror (122) with respect to a vertical axis (81) into new three-dimensional coordinates (X', Y', Z') indicating corresponding points (P') of a transformed perspective projection image data in a second coordinate system (83) rotated relative to the first coordinate system in a direction (B) opposite to the direction (A) of said inclination.

2. An omnidirectional visual system (10) according to claim 1, further comprising:

   an image processing section (14) for creating, based on input image data obtained by the omnidirectional camera (12), perspective projection image data for display which represents a perspective projection image in which a projection center is located at a focal point of the hyperboloidal mirror (122),
   wherein the omnidirectional camera (12) is provided such that an optical axis thereof is inclined with respect to a vertical axis by a prescribed angle, and
   wherein the image processing section creates perspective projection image data for display capable of horizontally displaying the perspective projection image.

3. An omnidirectional visual system (10) according to claim 1or 2, wherein when the optical axis (80) of the omnidirectional camera (12) corresponds to a Z-axis of an XYZ three-dimensional coordinate system where X, Y, and Z-axes are perpendicular to one another at a focal point of the hyperboloidal mirror (122) as the origin, the coordinate rotation processing section obtains new three-dimensional coordinates based on rotational determinants obtained by decomposing the angle of inclination of the Z-axis with respect to the vertical axis (81) so as to determine an angle of rotation around the X-axis, an angle of rotation around the Y-axis, and an angle of rotation around the Z-axis.

4. An omnidirectional visual system (10) according to claim 3, wherein the X- and Y-axes of an XY plane in the XYZ three-dimensional coordinate system are parallel to a long side and a short side, respectively, of an imaging element of the omnidirectional camera (12).

5. An omnidirectional visual system (10) according to claim 4, wherein the coordinate rotation processing section (142a) is a single-axial or two-axial coordinate rotation processing section which uses at least either the X- or Y-axis as a rotation angle.

6. An omnidirectional visual system (10) according to claim 2, 3 or 4, wherein the image processing section (14) is capable of, responsive to a manipulation of a pan angle for a perspective projection image, sequentially creating data for a perspective projection image where a tilt angle is invariable since a vertical axis passing through a focal point of the hyperboloidal mirror (122) is used as a rotation angle.

**7.** An image processing method comprising the steps of:

performing processing for obtaining three-dimensional coordinates (X, Y, Z), which indicate each point (P) of a perspective projection image data in a first coordinate system (82), based on image data transmitted by an omnidirectional camera (12) using a hyperboloidal mirror (122); and

performing coordinate rotation processing for transforming said three-dimensional coordinates (X, Y, Z) which indicate at each point (P) of the perspective projection image data in a first coordinate system (82), in accordance with an angle of inclination ($\alpha$) of the optical axis (80) of the hyperboloidal mirror with respect to the vertical axis (81) into new three-dimensional coordinates (X', Y', Z') indicating corresponding points (P') of a transformed perspective projection image data in a second coordinate system (83) rotated relative to the first coordinate system in a direction (B) opposite to the direction (A) of said inclination.

**8.** An image processing method according to claim 7, wherein when the optical axis of the omnidirectional camera corresponds to a Z-axis of an XYZ three-dimensional coordinate system where X, Y, and Z-axes are perpendicular to one another at a focal point of the hyperboloidal mirror as the origin, the coordinate rotation processing obtains new three-dimensional coordinates based on rotational determinants obtained by decomposing the angle of inclination of the Z-axis with respect to the vertical axis so as to determine an angle of rotation around the X-axis, an angle of rotation around the Y-axis and an angle of rotation around the Z-axis.

**9.** A control program for allowing a computer to execute each processing procedure of the image processing method of claim 7.

**10.** A computer-readable recording medium having the control program of claim 9 recorded therein.

**11.** A control program for allowing a computer to execute each processing procedure of the image processing method of claim 8.

**12.** A computer-readable recording medium having the control program of claim 11 recorded therein.

**Patentansprüche**

**1.** Rundum-Beobachtungssystem (10) zum Erzeugen perspektivischer Projektionsbilddaten zur Anzeige durch Verarbeiten von durch eine Rundumkamera (12) unter Verwendung eines Hyperbolspiegels (122) übertragener Bilddaten, das über einen Koordinatenverarbeitungsabschnitt (142a) zum Drehen dreidimensionaler Koordinaten (X, Y, Z), die jeden Punkt (P) der perspektivischen Projektionsbilddaten in einem ersten Koordinatensystem (82) kennzeichnen, entsprechend einem Neigungswinkel ($\alpha$) der optischen Achse (80) des Hyperbolspiegels (122) in Bezug auf eine vertikale Achse (81) in neue dreidimensionale Koordinaten (X', Y', Z'), die entsprechende Punkte (P') transformierter perspektivischer Projektionsbilddaten in einem zweiten Koordinatensystem (83), das in der Richtung (B) entgegengesetzt zur Neigungsrichtung (A) verdreht ist, verfügt.

**2.** Rundum-Beobachtungssystem (10) nach Anspruch 1, ferner mit:

einem Bildverarbeitungsabschnitt (14) zum Erzeugen, aufgrund eingegebener, von der Rundumkamera (12) erhaltener Bilddaten, perspektivischer Projektionsbilddaten zur Anzeige, die ein perspektivisches Projektiönsbild repräsentieren, bei dem das Projektionszentrum im Brennpunkt des Hyperbolspiegels (122) liegt;

wobei die Rundumkamera (12) in solcher Weise vorhanden ist, dass ihre optische Achse um einen vorgegebenen Winkel in Bezug auf eine vertikale Achse geneigt ist; und

wobei der Bildverarbeitungsabschnitt perspektivische Projektionsbilddaten zur Anzeige erzeugt, die das perspektivische Projektionsbild horizontal anzeigen können.

**3.** Rundum-Beobachtungssystem (10) nach Anspruch 1 oder 2, bei dem dann, wenn die optische Achse (80) der Rundumkamera (12) der Z-Achse eines dreidimensionalen XYZ-Koordinatensystems entspricht, bei dem die X, die Y- und die Z-Achse im Brennpunkt des Hyperbolspiegels (122) als Ursprung senkrecht aufeinander stehen, der Koordinatenrotations-Verarbeitungsabschnitt neue dreidimensionale Koordinaten auf Grundlage von Rotationsdeterminanten erhält, die durch Zerlegen des Neigungswinkels der Z-Achse in Bezug auf die vertikale Achse (81), um den Rotationswinkel um die X-Achse, den Rotationswinkel um die Y-Achse und den Rotationswinkel um die Z-Achse zu bestimmen, erhalten wurden.

4. Rundum-Beobachtungssystem (10) nach Anspruch 3, bei dem die X- und die Y-Achse einer XY-Ebene im dreidimensionalen XYZ-Koordinatensystem parallel zu einer langen Seite bzw. einer kurzen Seite eines Bildelements der Rundumkamera (12) verlaufen.

5. Rundum-Beobachtungssystem (10) nach Anspruch 4, bei dem der Koordinatenrotations-Verarbeitungsabschnitt (142a) ein uniaxialer oder doppelaxialer Koordinatenrotations-Verarbeitungsabschnitt ist, der die X- und/oder die Y-Achse als Rotationswinkel verwendet.

6. Rundum-Beobachtungssystem (10) nach Anspruch 2, 3 oder 4, bei dem der Bildverarbeitungsabschnitt (14), in Reaktion auf eine Manipulation eines Panoramawinkels für ein perspektivisches Projektionsbild, sequenziell Daten für ein perspektivisches Projektionsbild erzeugen kann, wobei ein Kippwinkel invariabel ist, da eine durch den Brennpunkt des Hyperbolspiegels (122) verlaufende vertikale Achse als Rotationswinkel verwendet wird.

7. Bildverarbeitungsverfahren mit den folgenden Schritten:

   Ausführen einer Verarbeitung zum Erhalten dreidimensionaler Koordinaten (X, Y, Z), die jeden Punkt (P) perspektivischer Projektionsbilddaten in einem ersten Koordinatensystem (82) angeben, auf Grundlage von Bilddaten, die durch eine Rundumkamera (12) unter Verwendung eines Hyperbolspiegels (122) übertragen werden; und Ausführen einer Koordinatenrotationsverarbeitung zum Transformieren der dreidimensionalen Koordinaten (X, Y, Z), die an jedem Punkt (P) der perspektivischen Projektionsbilddaten in einem ersten Koordinatensystem (82), entsprechend einem Neigungswinkel ($\alpha$) der optischen Achse (80) des Hyperbolspiegels in Bezug auf die vertikale Achse (81) in neue dreidimensionale Koordinaten (X', Y', Z'), die entsprechende Punkte (P') transformierter perspektivischer Projektionsbilddaten in einem zweiten Koordinatensystem (83) angeben, das relativ zum ersten Koordinatensystem in der Richtung (B) entgegengesetzt zur Neigungsrichtung (A) verdreht ist.

8. Bildverarbeitungsverfahren nach Anspruch 7, bei dem dann, wenn die optische Achse der Rundumkamera der Z-Achse eines dreidimensionalen XYZ-Koordinatensystems entspricht, wobei die X-, die Y- und die Z-Achse im Brennpunkt des Hyperbolspiegels als Ursprung senkrecht aufeinander stehen, die Koordinatenrotationsverarbeitung neue dreidimensionale Koordinaten auf Grundlage von Rotationsdeterminanten erhält, die **dadurch** erhalten wurden, dass der Neigungswinkel der Z-Achse in Bezug auf die vertikale Achse zerlegt wurde, um den Rotationswinkel um die X-Achse, den Rotationswinkel um die Y-Achse und den Rotationswinkel um die Z-Achse zu bestimmen.

9. Steuerungsprogramm, das es einem Computer ermöglicht, jede Verarbeitungsprozedur des Bildverarbeitungsverfahrens des Anspruchs 7 auszuführen.

10. Computer-lesbarer Aufzeichnungsträger, auf dem das Steuerungsprogramm des Anspruchs 9 aufgezeichnet ist.

11. Steuerungsprogramm, das es einem Computer ermöglicht, jede Verarbeitungsprozedur des Bildverarbeitungsverfahrens des Anspruchs 8 auszuführen.

12. Computer-lesbarer Aufzeichnungsträger, auf dem das steuerungsprogramm des Anspruchs 11 aufgezeichnet ist.


**Revendications**

1. Système de vision omnidirectionnelle (10) pour créer des données d'image de projection en perspective à afficher en traitant des données d'image transmises par une camera omnidirectionnelle (12) à l'aide d'un miroir hyperbolique (122), le système comprenant une partie de traitement de coordonnées (142a) destinées à transformer par rotation des coordonnées tridimensionnelles (X, Y, Z) qui indiquent chaque point (P) des données d'image de projection en perspective dans un premier système de coordonnées (82), en fonction d'un angle d'inclinaison ($\alpha$) de l'axe optique (80) du miroir hyperbolique (122) par rapport à un axe vertical (81), en nouvelles coordonnées tridimensionnelles (X', Y', Z') indiquant des points (P') correspondants de données d'image de projection en perspective transformées dans un second système de coordonnées (83) tourné par rapport au premier système de coordonnées dans une direction (B) opposée à la direction (A) de ladite inclinaison.

2. Système de vision omnidirectionnelle (10) selon la revendication 1, comprenant également:

une partie de traitement d'image (14) destinée à créer, à partir de données d'image d'entrée obtenues par la caméra omnidirectionnelle (12), des données d'image de projection en perspective à afficher représentant une image de projection en perspective

dans laquelle un centre de projection est situé au niveau d'un point focal du miroir hyperbolique (122), dans lequel la caméra omnidirectionnelle (12) est disposée de façon que son axe optique soit incliné d'un angle prescrit par rapport à un axe vertical, et dans lequel la partie de traitement d'image crée des données d'image de projection en perspective à afficher permettant d'afficher horizontalement l'image de projection en perspective.

3. Système de vision omnidirectionnelle (10) selon la revendication 1 ou 2, dans lequel, lorsque l'axe optique (80) de la caméra omnidirectionnelle (12) correspond à un axe Z d'un système de coordonnées tridimensionnelles XYZ dans lequel des axes X, Y et Z sont perpendiculaires les uns aux autres au niveau d'un point focal du miroir hyperbolique (122), considéré comme origine, la partie de traitement par rotation de coordonnées obtient de nouvelles coordonnées tridimensionnelles à partir de déterminants de rotation obtenus par la décomposition de l'angle d'inclinaison de l'axe Z par rapport à l'axe vertical (81), afin de déterminer un angle de rotation autour de l'axe X, un angle de rotation autour de l'axe Y et un angle de rotation autour de l'axe Z.

4. Système de vision omnidirectionnelle (10) selon la revendication 3, dans lequel les axes X et Y d'un plan XY dans le système de coordonnées tridimensionnelles XYZ sont respectivement parallèles à un grand côté et à un petit côté d'un élément d'imagerie de la caméra omnidirectionnelle (12).

5. Système de vision omnidirectionnelle (10) selon la revendication 4, dans lequel la partie de traitement par rotation de coordonnées (142a) est une partie de traitement par rotation de coordonnées à un axe ou à deux axes qui utilise l'axe X et/ou l'axe Y comme angle de rotation.

6. Système de vision omnidirectionnelle (10) selon l'une quelconque des revendications 2, 3 et 4, dans lequel la partie de traitement d'image (14) est, en réponse à une manipulation d'un angle panoramique pour une image de projection en perspective, capable de créer séquentiellement des données pour une image de projection en perspective dans laquelle un angle d'inclinaison est invariable puisqu'un axe vertical passant par un point focal du miroir hyperbolique (122) est utilisé comme angle de rotation.

7. Procédé de traitement d'image comprenant les étapes qui consistent à:

exécuter un traitement pour obtenir des coordonnées tridimensionnelles (X, Y, Z) qui indiquent chaque point (P) de données d'image de projection en perspective dans un premier système de coordonnées (82), à partir de données d'image transmises par une caméra omnidirectionnelle (12) à l'aide d'un miroir hyperbolique (122); et exécuter un traitement par rotation de coordonnées pour transformer lesdites coordonnées tridimensionnelles (X, Y, Z) qui indiquent chaque point (P) des données d'image de projection en perspective dans un premier système de coordonnées (82), en fonction d'un angle d'inclinaison ($\alpha$) de l'axe optique (80) du miroir hyperbolique par rapport à l'axe vertical (81), en nouvelles coordonnées tridimensionnelles (X', Y', Z') indiquant des points (P') correspondants de données d'image de projection en perspective transformées dans un second système de coordonnées (83) tourné par rapport au premier système de coordonnées dans une direction (B) opposée à la direction (A) de ladite inclinaison.

8. Procédé de traitement d'image selon la revendication 7, dans lequel, lorsque l'axe optique de la caméra omnidirectionnelle correspond à un axe Z d'un système de coordonnées tridimensionnelles XYZ dans lequel des axes X, Y et Z sont perpendiculaires les uns aux autres au niveau d'un point focal du miroir hyperbolique, considéré comme origine, le traitement par rotation de coordonnées obtient de nouvelles coordonnées tridimensionnelles à partir de déterminants de rotation obtenus par la décomposition de l'angle d'inclinaison de l'axe Z par rapport à l'axe vertical, afin de déterminer un angle de rotation autour de l'axe X, un angle de rotation autour de l'axe Y et un angle de rotation autour de l'axe Z.

9. Programme de commande destiné à permettre à un ordinateur d'exécuter chaque étape de traitement du procédé de traitement d'image de la revendication 7.

10. Support d'enregistrement lisible par ordinateur, sur lequel est enregistré le programme de commande de la revendication 9.

11. Programme de commande destiné à permettre à un ordinateur d'exécuter chaque étape de traitement du procédé de traitement d'image de la revendication 8.

12. Support d'enregistrement lisible par ordinateur, sur lequel est enregistré le programme de commande de la revendication 11.

## FIG.1

Camera attaching section (11)
Omnidirectional camera (12)

Operating section (13)

Image processing section (14, 10)
Input image storing section (141)
Perspective projection image transforming section (142)
Program memory (142d)
CPU (142c)
Coordinate creating section (142b)
Coordinate rotation processing section (142a)
Perspective projection image storing section (143)

Image display section (15)

*FIG.2*

*FIG.3*

*FIG.4*

## FIG.5

*FIG.6*

```
         ┌─────────────┐
         │    Start    │
         └──────┬──────┘
                │
  ┌─────────────▼──────────────────────┐
  │ Converting point on perspective projection │
  │ image into point on perspective projection │─── S1
  │            image surface           │
  └─────────────┬──────────────────────┘
                │
  ┌─────────────▼──────────────────────┐
  │    Rotation processing of point on  │
  │  perspective projection image surface │─── S2
  └─────────────┬──────────────────────┘
                │
  ┌─────────────▼──────────────────────┐
  │ Calculating values of point on input image │
  │  based on values of point on perspective │─── S3
  │        projection image surface     │
  └─────────────┬──────────────────────┘
                │
  ┌─────────────▼──────────────────────┐
  │ Copying image data designated by point on │
  │   input image to location designated by │─── S4
  │   point on perspective projection image │
  └─────────────┬──────────────────────┘
                │
         ┌──────▼──────┐
         │     End     │
         └─────────────┘
```

## FIG. 7

## FIG. 8

FIG.9

## FIG.10

# FIG.11

FIG.12

EP 1 331 605 B1

# FIG.13

Optical axis
Vertical axis

21

262

27

282

ABC